# Europäisches Patentamt
## European Patent Office
## Office européen des brevets

(11) Veröffentlichungsnummer: **0 257 126**
**B1**

(12) **EUROPÄISCHE PATENTSCHRIFT**

(45) Veröffentlichungstag der Patentschrift:
**11.10.89**

(51) Int. Cl.⁴: **B29D 30/54**

(21) Anmeldenummer: **86111707.5**

(22) Anmeldetag: **23.08.86**

(54) **Spreizbarer Ring zum Abdichten einer Hülle am Wulst eines rundzuerneuernden Reifens.**

(43) Veröffentlichungstag der Anmeldung:
**02.03.88 Patentblatt 88/9**

(45) Bekanntmachung des Hinweises auf die Patenterteilung:
**11.10.89 Patentblatt 89/41**

(84) Benannte Vertragsstaaten:
**AT BE CH DE FR GB IT LI LU NL SE**

(56) Entgegenhaltungen:
FR-A- 2 319 483
US-A- 2 988 780
US-A- 3 227 251

(73) Patentinhaber: **VV-System AG, Baumackerstrasse 24,
CH-8050 Zürich(CH)**

(72) Erfinder: **Schimanek, Karl, Althoossteig 15,
CH-8046 Zürich(CH)**

(74) Vertreter: **Patentanwälte Wenzel & Kalkoff,
Flasskuhle 6 Postfach 2448, D-5810 Witten(DE)**

## Beschreibung

Die Erfindung betrifft einen spreizbaren Ring nach dem Oberbegriff des Anspruchs 1. Ein derartiger Ring ist zum Beispiel in der FR-A 2 319 483 beschrieben. In der einen Ausführungsform hat der Ring zwei Enden, die mit Hilfe einer Spreizklemme aufeinander zu oder voneinander weg bewegt werden, um den Gesamtdurchmesser des Ringes zu vergrößern und zu verkleinern. Im Zustand des geringsten Durchmessers wird der Ring in die seitliche Öffnung eines Reifens bei aufgelegter Hülle hineingeschoben, wobei drei gleichmäßig um den Umfang verteilte Begrenzungen von innen an den Wulst gelegt werden.

Diese Handhabung erfordert, daß nach dem Einsetzen des Ringes in die seitliche Reifenöffnung eine Auswärtsbewegung stattfinden muß, bis die drei Begrenzungen von der Innenseite her an dem Wulst anliegen. Dabei besteht die Gefahr, daß die Hülle im Wulstbereich aus der glatten Anlage gelöst wird und sich in Falten legt. Damit wird im Bereich einer Falte eine Undichtigkeit erzeugt, die das Aufbringen eines Unterdrucks später verhindert.

Im Bereich der beiden Endabschnitte kommt es bei gespreiztem Ring zu einer klaffenden Lücke, in der die Unterstützung zum Andrücken der Hülle an den Reifenwulst fehlt. Auch an dieser Stelle kann es zu Undichtigkeit kommen. Dies gilt umsomehr, als der Ring extrem im Durchmesser variiert werden muß, um die Begrenzungen in das Innere des Reifens hineinzubekommen.

Aus der DE-OS 2 940 314 ist ein weiterer Ring bekannt, bei dem die Spreizung durch Aufblasen eines schlauchartigen Gummiringes erfolgt, der auf seiner Innenseite durch einen Metallreifen gestützt ist. Die Standzeit einer derartigen Gummikammer ist äußerst gering, da mit jener Druck- und Wärmebehandlung quasi eine Übervulkanisation des Gummikörpers stattfindet. Außerdem ist die Formstabilität gering, da im aufgeblasenen Zustand nicht nur die dem Wulst zugewandte Seite des Durchmessers größer wird sondern auch die restlichen Gummiwände, so daß der Ring leicht von den Wulsten abrutscht.

Es ist demnach Aufgabe der Erfindung, einen Ring der eingangs genannten Art so zu verbessern, daß trotz Spreizbarkeit eine sichere und stabile Abdichtung einer Hülle an dem Wulst des rundzuerneuernden oder zu reparierenden Reifens möglich ist und insbesondere die Bildung von Falten der Hülle im Bereich der Abdichtung vermieden wird.

Zur Lösung dieser Aufgabe schlägt die Erfindung die kennzeichnenden Merkmale des Anspruchs 1 vor.

Mit einem Ring dieser Art wird eine Hülle an einem Reifenwulst folgendermaßen abgedichtet. Nach dem Auflegen der Hülle auf den rundzuerneuernden Reifenrohling wird von außen in die kreisringförmige Wulstöffnung ein Ring gemäß der Erfindung eingeschoben, wobei sich die überstehenden Kantenbereich der Hülle selbsttätig von innen an den Wulst anlegen. Das Einsetzen des Ringes wird so weit fortgeführt, bis er annähernd zur Gänze in die Wulstöffnung eingetaucht ist. Bei einem Ring mit einer zylindrischen Dichtfläche beendet der an der Außenseite vorgesehene Anschlag die Einsetzbewegung, so daß der Ring an allen Stellen gleich tief, also gleichmäßig in die seitliche Reifenöffnung eingesetzt ist. Anschließend wird die Spreizklemme betätigt, so daß sich der Ring aufweitet. Eventuelle Wulsttoleranzen werden dadurch ausgeglichen, daß gemäß einer Weiterbildung der Spreizhebel der Spreizklemme federnd gelagert ist.

Bei entsprechender Gestaltung der Spreizklemme rastet der zur Betätigung vorgesehene Spannhebel in der maximalen Spreizstellung in eine Übertotpunktlage ein, so daß keine gesonderte Sicherung erforderlich ist.

Die beschriebene Handhabung wird noch vereinfacht, wenn an der Innenfläche des Ringes ein Handgriff angebracht ist, der dem Spannhebel der Spreizklemme in der maximalen Schrumpflage gegenüberliegend angeordnet ist. Dadurch kann der Ring mit beiden Händen diagonal erfaßt und in den Wulst eingesetzt werden, wobei die Spreizung im unmittelbaren Anschluß an das Einsetzen durch Schwenken des Spannhebels erfolgen kann. Dazu wird mehr oder weniger auf natürliche Weise der Griff vom Einsetzen des Ringes in die Wulstöffnung bis zum Ende der Verschwenkung für den Spreizvorgang nicht gelockert.

Insbesondere bei sehr großen Ringen, beispielsweise für sogenannte EM-Reifen, ist die Eigenstabilität der Ringe so groß, daß eine manuelle Spreizung einer Bedienungsperson nicht mehr zugemutet werden kann. Es müssen dann motorische Spannmittel eingesetzt werden, wie z.B. ein Pneumatikzylinder, der jedoch nicht fester Bestandteil des Ringes ist, sondern jeweils für die Spreizbewegung bzw. für die Schrumpfbewegung in Stellung gebracht und betätigt wird. Bezüglich dieser Bauart schlägt die Erfindung vor, daß die Spreizklemme als Kniehebel ausgebildet ist, dessen Mittelgelenk in der maximalen Spreizstellung in eine Über-Totpunktlage einfällt, und daß an dem Mittelgelenk und an der gegenüber liegenden Stelle des Ringes jeweils eine formschlüssige Kupplung zum vorübergehenden Einsetzen eines pneumatischen oder hydraulischen Spannzylinders oder einer elektrisch betreibbaren Spannspindel angebracht ist. Im Zusammenhang mit der Beschreibung der nachfolgenden Figuren ist beispielhaft eine konkrete Ausgestaltung entsprechender Kupplungen beschrieben.

Es ist besonders zweckmäßig, die geöffnete Stelle des Ringes mit zwei Teilfugen zu versehen, nämlich das eine Ende gabelförmig und das andere Ende zungenförmig zu gestalten, wodurch gleichzeitig eine Führung für den Ring vorhanden ist, so daß er nicht die Form einer Schraubenlinie annehmen kann. Die Dichtwirkung wird dadurch stark verbessert.

Bezüglich der Wulstform sind zur Zeit zwei grundsätzliche Bauformen auf dem Markt, nämlich ein Normalreifen, bei dem die Wulstfläche annähernd zylindrisch oder leicht konisch mit einem Öffnungswinkel von bis zum 5° verläuft und sogenannte Steilschulterreifen, bei denen die Wulstfläche unter einem Winkel von 15° zur Mittelachse des Reifentorus verläuft. Während für die Normalreifen im wesentlichen zylindrische Dichtflächen an dem Ring gemäß der Erfindung verwendet werden, sind die Dichtflächen für Steilschulterreifen entsprechend angepaßt; sie verlaufen also unter einem identischen Winkel zur Mittelachse des Ringes.

Insbesondere die Steilschulterreifen sind mit starken Durchmessertoleranzen im Wulstbereich behaftet, so daß oftmals der normale Spreizweg eines Ringes gemäß der Erfindung nicht ausreicht. Es ist für diese Fälle in Weiterbildung vorgesehen, daß jeder Ring mit einem oder zwei weiteren Dichtflächen mit jeweils nach außen größer werdendem Durchmesser versehen ist, wobei zwischen jeder Dichtfläche vorzugsweise ein gegensinnig geneigter Rand angeordnet ist, der jeweils das Herauswandern des Ringes entlang der Wulstflächenschräge sicher verhindert. Ein entsprechender Rand kann selbstverständlich auch an einem Ring gemäß der Erfindung mit einer einzigen Dichtfläche für einen Steilschulterreifen angebracht sein. Insbesondere ein mit mehreren Dichtflächen versehener Ring sollte aus einer Aluminiumlegierung oder aus Kunststoff, wie z. B. Hart-PVC od. dgl. hergestellt sein, da andernfalls das Gewicht die Handhabung beeinträchtigt.

Nachfolgend werden Ausführungsbeispiele der Erfindung, die in der Zeichnung dargestellt sind, näher erläutert; in der Zeichnung zeigen:

Figur 1 eine Seitenansicht eines Ringes gemäß der Erfindung für relativ kleine Durchmesser;
Figur 2 eine Querschnittsansicht als Ausschnitt des Ringes gemäß der Figur 1,
Figur 3 eine Ansicht gemäß der Figur 2 eines weiteren Ausführungsbeispiels eines erfindungsgemäßen Ringes für einen Steilschulterreifen,
Figur 4 eine Querschnittsansicht durch einen Ring für einen Vollgummireifen ,
Figur 5 eine Querschnittsansicht durch einen Ring für einen Steilschulterreifen mit mehreren Dichtflächen nebeneinander zum Ausgleich von starken Wulstdurchmesserschwankungen,
Figur 6 eine Querschnittsansicht durch einen Reifenrohling mit aufgebrachter und an den Wulsten unter Zuhilfenahme erfindungsgemäßer Ringe abgedichteter Hülle,
Figur 7 eine Ansicht gemäß der Figur 1 eines weiteren Ausführungsbeispiels für besonders große Reifen und
Figur 8 eine Querschnittsansicht der in der Figur 7 gestrichelt hervorgehobenen Stelle .

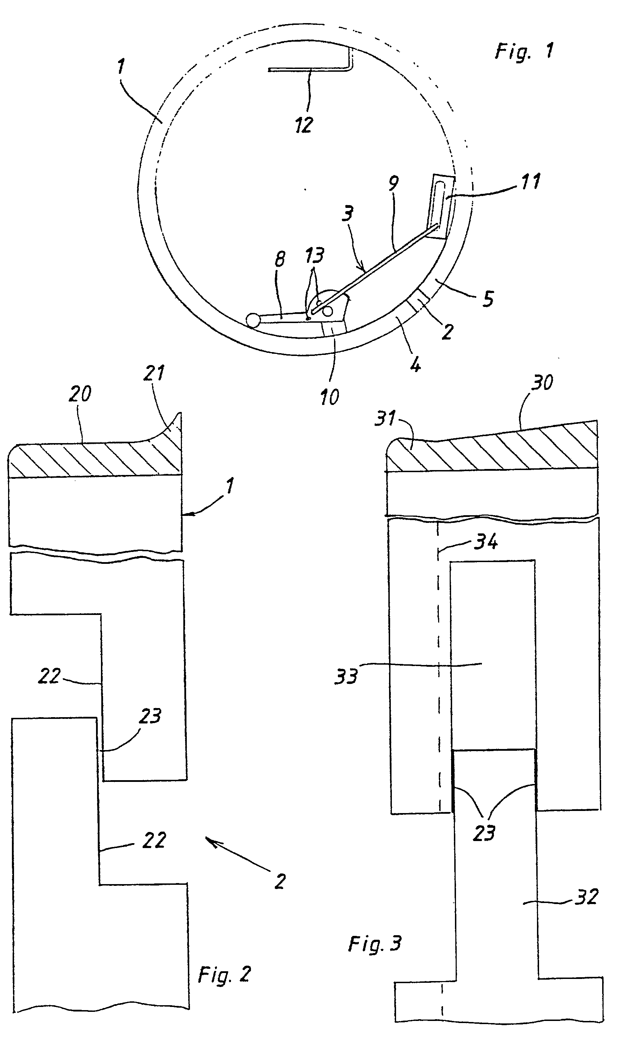

In der Figur 1 ist die Seitenansicht eines Ringes 1 gemäß der Erfindung wiedergegeben, der für kleine bis mittlere Reifengrößen zum Einsatz kommt. Der Ring 1 besteht aus Metall, insbesondere aus einer Leichtmetalllegierung oder aus Kunststoff und ist infolge einer ge öffneten Stelle 2 spreizbar und schrumpfbar. Die Enden 4 und 5 zu beiden Seiten der geöffneten Stelle können mit Hilfe einer Spreizklemme 3 zueinander bewegt werden, so daß der Ring 1 in der Schrumpfstellung in die Wulstöffnung eines Reifens eingeführt und in dieser Lage gespreizt werden kann.

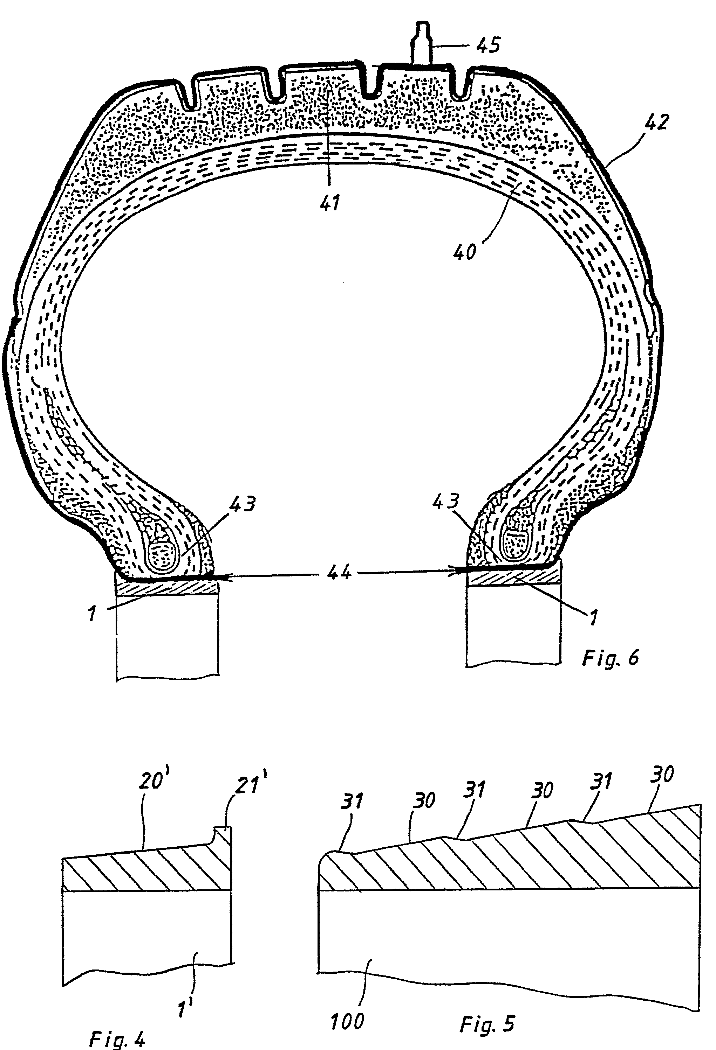

Dazu ist ein manuell zu betätigender Spannhebel 8 sowie ein Spreizhebel 9 vorhanden, die über eine Konsole 10 bzw. über einen Federblock 11 an den Enden 4 und 5 gehalten sind. In der Figur 1 ist die maximale Schrumpflage wiedergegeben, in der der Ring 1 in die Wulstöffnung eines rundzuerneuernden und mit einer Hülle versehenen Reifens eingesetzt wird. Durch Schwenken des Spannhebels 8 um annähernd 180° wird der Spreizhebel 9 seitlich verschoben, bis sich die äußere Dichtfläche 20 (Fig. 2) des Ringes 1 an den Wulst angelegt hat (siehe auch Fig. 6).

Ein dann noch nicht aufgezehrter Spreizweg des Spreizhebels 9 wird durch ein elastisches Ausweichen des Widerlagers in dem Federblock 11 aufgefangen, so daß das Umlegen des Spannhebels 8 in die Spreizlage annähernd unabhängig von der jeweiligen Wulsttoleranz gelingt. In der maximalen Schrumpflage - das ist die dargestellte Lage in der Figur 1 - liegt dem Spannhebel 8 ein Handgriff 12 gegenüber, und an dem Spannhebel 8 und an diesem Handgriff 12 wird der Ring 1 erfaßt und in die Wulstöffnung eingesetzt. Nach dem Einsetzen wird in der Regel ohne Lockerung des Griffes an dem Spannhebel 8 die Spreizung vorgenommen, was äußerst geringe Zeit in Anspruch nimmt.

Bei dem Ausführungsbeispiel der Figur 1 ist der Spreizhebel als Bügel 9 ausgebildet, dessen dem Spannhebel 8 zugewandte Seite aus zwei einwärts gebogenen Enden besteht. Diese können wahlweise in Lochpaare 13 an dem Spannhebel (8) eingesteckt werden, wodurch der Spannweg bzw. der Spreizweg veränderbar ist. In dieser Weise können sehr leicht Reifentoleranzen ausgeglichen werden.

Aus der Figur 2 ist ersichtlich, daß die Dichtfläche 20 des Ringes 1 im wesentlichen zylindrisch verläuft und daß an dem äußeren Rand ein Anschlag 21 angeformt ist, der das Durchstecken des Ringes 1 durch die Wulstöffnung hindurch verhindert. Die dem Anschlag 21 abgewandte Seite ist zur Vermeidung von Beschädigungen und zum leichteren Einführen des Ringes 1 in die Wulstöffnung leicht gerundet.

Im Bereich der geöffneten Stelle 2 sind an jedem Ende 4 und 5 Ausklinkungen 22 vorgesehen, die in der Mitte eine sich überlappende Teilfuge 23 ergeben. Abweichend von der Darstellung sollte die Teilfuge 2 möglichst geschlossen sein, damit an dieser Stelle die Abdichtung der Hülle an dem Reifenwulst nicht zu stark abfällt. Die gewählte Darstellung soll anzeigen, daß derartige Breiten einer Teilfuge 23 jedoch noch sicher beherrscht werden.

In der Figur 3 ist ein Ring gemäß der Erfindung für einen sogenannten Steilschulterreifen wiedergegeben, bei dem die Dichtfläche 30 unter einem Winkel von ca. 15 ° zur Mittelachse des Ringes verläuft. Um ein Herausgleiten des Ringes aus der konischen Wulstöffnung zu vermeiden, ist an der Innenseite des Ringes ein Rand 31 angeformt, der eine gegensinnige Schräge aufweist. Wiederum ist die innere Kante gerundet, um Beschädigungen zu vermeiden, und um das Einführen des Ringes in die Wulstöffnung zu erleichtern.

Bei diesem Ausführungsbeispiel ist der Überlappungsbereich durch eine Gabel einerseits mit einer dazwischenliegenden Nut 33 und durch eine Zunge 32 andererseits gebildet, so daß zwei Teilfugen 23 vorhanden sind. Dadurch wird zum einen die Abdichtung verbessert -es tritt bei einer gewissen Undichtigkeit in jeder Teilfuge 23 ein Labyrintheffekt ein; zum anderen ist eine Abstandsvergrößerung der Teilfuge durch die gegenseitige Führung innerhalb der Nut 33 sicher vermieden. Es ist deutlich zu erkennen, daß die Grenzlinie 34 zwischen der Dichtfläche 30 und dem Rand 31 außerhalb jeder Teilfuge 23 verläuft.

In der Figur 4 ist eine Ringform wiedergegeben, die für Vollgummireifen Verwendung finden. Aufgrund der hierbei verwandten Profile erübrigt sich ein innerer Rand vergleichbar dem Rand 31 gemäß dem Ausführungsbeispiel der Figur 3. Lediglich an der Außenseite der Dichtfläche 20' ist wiederum ein Anschlag 21' vorgesehen, der ein zu tiefes Hineindrücken des Ringes 1' in die Öffnung eines Vollgummireifens verhindert.

Das Ausführungsbeispiel gemäß der Figur 5 ist im Prinzip eine Verdreifachung des Ringes gemäß der Figur 3, so daß auf der Außenseite des Ringes 100 drei Dichtflächen 30 nebeneinander angeordnet sind, die nach außen hin einen jeweils zunehmenden Durchmesser aufweisen.

Bei den Steilschulterreifen kommen erhebliche Durchmesserschwankungen im Wulstbereich vor, und zwar sind Durchmesserschwankungen von 12 bis 15 mm in Extremfällen zu beoachten. Derartige Toleranzschwankungen sind mit der in der Regel vorgesehene Spreizbewegung nicht mehr beherrschbar, so daß eine doppelte oder, wie in der Figur 5 gezeigt, eine dreifache Ausführung der Dichtfläche vorgesehen ist. Es versteht sich von selbst, daß zur Herbeiführung einer befriedigenden Dichtung im Bereich der offenen Stelle (nicht dargestellt) jeweils ein gabelförmiger Abschnitt und ein zungenförmiger Abschnitt pro Dichtfläche vorhanden sind, da andernfalls lediglich eine einzige Dichtfläche im Bereich der offenen Stelle ausreichend abgestützt wäre.

Der Ring 100 gemäß der Figur 5 wird in üblicher Weise eingesetzt, also in der maximalen Schrumpflage in die Wulstöffnung geschoben und dann gespreizt. Wenn dabei der Widerstand an dem Spannhebel zu gering ist und möglicherweise die Über-Totpunktlage mangels Widerstand nicht spürbar ist, wird der Ring erneut in die maximale Schrumpflage gebracht und um eine Stufe weiter in die Wulstöffnung hineingeschoben, so daß der mittlere oder sogar der äußere Dichtbereich 30 zum Einsatz kommt. Nach dem Spreizen des Ringes 100 sind dieselben Voraussetzungen wie bei einem Ring 1 vorhanden.

Anhand der Figur 6 wird verdeutlicht, daß pro Reifenrohling zwei Ringe 1 zur Verwendung kommen und in welcher Weise die Anbringung erfolgt.

Auf eine abgerauhte Karkasse 40 ist mit Hilfe einer nicht näher dargestellten Bindegummischicht ein Laufstreifen 41 aufgebracht und mit Hilfe einer Hülle 42 abgedeckt. Die Hülle ist als innen offener Torus ausgebildet und überdeckt den aus der Karkasse 40, dem Bindegummi und dem Laufstreifen 41 gebildeten Reifenaufbau bis weit über die Wülste 43. Durch Einschieben der Ringe 1 in der maximalen Schrumpflage werden die über den jeweiligen Wulst 43 überstehenden Bereiche an die Wulstfläche angelegt und nach innen umgebogen. Die elastische Hülle 42 gestattet eine derartige Verformung. Durch Aufpreizen der Ringe 1 erfolgt eine feste Anlage der Hülle 42 an der Wulstfläche in den Abdichtbereichen 44, so daß der Zwischenraum zwischen der Hülle 42 und dem Reifenaufbau über ein Ventil 45 unter Unterdruck gesetzt werden kann.

Der Unterdruck sorgt dafür, daß der Laufstreifen 41 allseits an die Karkasse 40 angedrückt wird, selbst wenn bei der Druck- und Wärmebehandlung die Klebkraft des Bindegummis nachläßt. In der Regel wird dann innerhalb des Autoklaven mit einem sogenannten Druckausgleich gearbeitet, also mit einer Verfahrensweise, bei der zwischen der Innenseite der Hülle 42 und der Außenseite stets eine Druckdifferenz von ca. 1 bar aufrechterhalten wird. Die Hintergründe dieser Varfahrensweise sind für das Verständnis der Erfindung ohne Bedeutung.

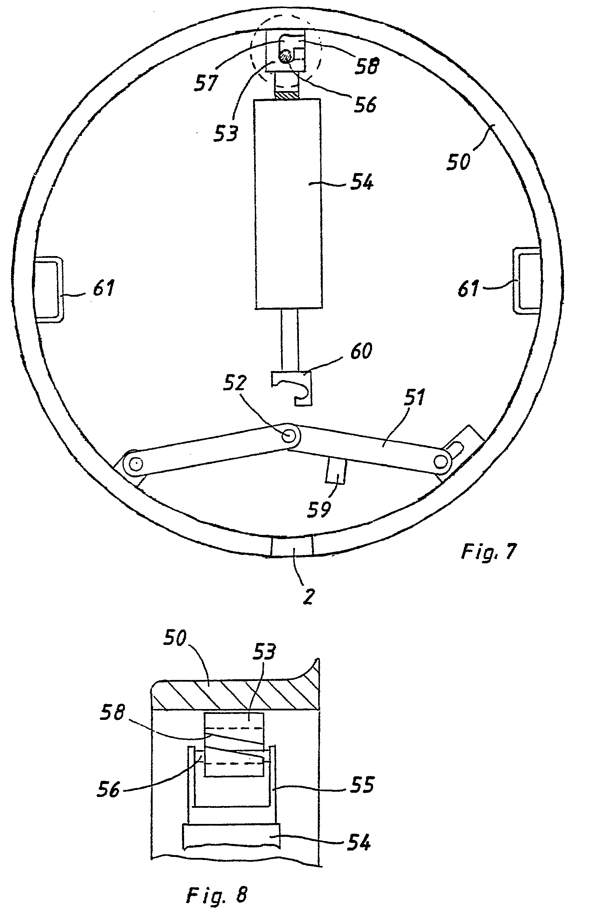

In den Figuren 7 und 8 ist ein Ausführungsbeispiel für einen Ring gemäß der Erfindung wiedergegeben, der für die Abdichtung der Hülle an besonders großen Reifen vorgesehen ist, beispielsweise an EM-Reifen. Zu beiden Seiten der geöffneten Stelle 2 des Ringes 50 befindet sich das Widerlager eines Kniehebels 51, von denen das eine widerum in einem Federblock elastisch gegenüber dem Ring 50 gelagert ist. Der Kniehebel 51 ist aus insgesamt vier Hebeln gebildet. Über die beiden sichtbaren Hebel hinaus liegen unterhalb der Bildebene identische Hebel. Die beiden Hebelpaare sind mit Hilfe eines mittleren Bolzens 52 gelenkig verbunden.

Auf der gegenüberliegenden Seite des Ringes 50 befindet sich eine Konsole 53, und zwischen dieser Konsole 53 und dem mittleren Bolzen 52 kann ein pneumatisch betriebener Spannzylinder 54 in Stellung gebracht werden, mit dessen Hilfe die Spreizung des Ringes 50 und auch die Schrumpfung auf den minimalen Durchmesser vorgenommen werden kann. Der Spannzylinder 54 ist nur formschlüssig und vorübergehend an dem Ring 50 angebracht, so daß er für die Verweilzeit des Ringes 50 an einem rundzuerneuernden Reifen in einem Autoklaven abgenommen werden kann.
Zur Handhabung dienen seitliche Handgriffe 61 , gegebenenfalls wird der Ring auch mit einem Kettenzug gehoben und in Stellung gebracht.

Die Konsole 53 ist in Wirkrichtung des Spannzylinders 54 mit einem Langloch 57 versehen, zu dem eine seitliche, schräggestellte Zugangsöffnung 58 angebracht ist. Der Spannzylinder 54 ist an dieser Seite mit einer Gabel 55 (Figur 8) sowie einem Bolzen 56 versehen, dessen Durchmesser gerade so gewählt ist, daß er mit reichlich Spiel die Zugangsöffung 58 passieren kann. Am unteren Ende der Kolbenstange des Spannzylinders 54 befindet sich eine Art Klaue 60, die sowohl eine Zugbewegung auf den mittleren Bolzen 52 ausüben kann als auch eine Druckbewegung, wobei dann der mittlere Bolzen jeweils an der rechten Seite oder an der linken Seite der Anlagefläche der Klaue 60 anliegt.

Es wird davon ausgegangen, daß der Ring 50 für die Verwendung in einem Gestell oder an einer Wand angelehnt bereitsteht, bzw. an einem Hebezeug aufgehängt ist. Der Spannzylinder wird nun von der vor den Ring 50 tretenden Bedienungsperson mit dem Bolzen 56 durch die Zugangsöffnung 58 gefädelt und in das Langloch 57 eingehängt. Dabei muß der Spannzylinder leicht schräg gehalten werden, was jedoch die natürliche Annäherungslage des Spannzylinders 54 ist, wenn er von einer Person an den Ring 50 herangeführt wird. Nach dem Einhängen wird er mit der einen Hand geführt und mit der anderen Hand über die Betätigung eines Ventils (nicht dargestellt) soweit auseinandergefahren, daß die Klaue 60 den mittleren Bolzen 52 des Kniehebels 51 erfassen kann. Danach wird der Spannzylinder 54 zusammengefahren, so daß der Ring seine maximale Schrumpflage einnimmt. In dieser Form wird der Ring 50 in die Wulstöffnung des mit einer Hülle versehenen Reifens eingeschoben.

Nach der Positionierung des Ringes 50 innerhalb der betreffenden Wulstöffnung wird der Spannzylinder 54 durch Umschalten des genannten Ventiles gelängt, wobei die Klaue 60 von der ziehenden Anlage in die schiebende Anlage verrutscht. Die Spreizung erfolgt nun bis in die Über-Totpunktlage, in der eine Stütze 59 auf die Innenseite des Ringes 50 aufsetzt. Sie dient zur Anpassung der Über-Totpunktlage und verhindert ein zu weites Durchsacken des Kniehebels 51. In der Über-Totpunktlage ist der Kniehebel 51 vollkommen stabil, so daß nun der Spannzylinder 54 gefahrlos entfernt werden kann. Nach einem leichten oder vollständigen Zurückziehen der Kolbenstange wird der Spannzylinder 54 wiederum durch leichtes Schräghalten und durch geringfügiges Anheben aus der Konsole 53 entfernt. Er kann nun für den entsprechenden Ring 50 für den anderen Wulst oder für jede andere Spannaufgabe innerhalb des betreffenden Vulkanisationsbetriebes verwendet werden.

## Patentansprüche

1. Spreizbarer Ring (1) zum Abdichten einer Hülle (42) am Wulst (43) eines rundzuerneuernden oder zu reparierenden Reifens während einer Druckund Wärmebehandlung in einem Autoklaven aus einem eigensteifen Material wie Metall, Hartkunststoff oder faserverstärktem Kunststoff, mit zwei sich überlappenden Enden, die gegeneinander beweglich sind, um den Ring zu spreizen und damit den Durchmesser zu vergrößern beim Abdichten und um den Ring schrumpfen zu lassen und damit den Durchmesser zu verkleinern zum Herausnehmen des Ringes nach der Druck- und Wärmebehandlung, mit einer die beiden Enden übergreifenden Spreizklemme (3) und mit einer Begrenzung zur axialen Ausrichtung des Ringes (1) gegenüber dem Wulst (43), wobei eine an der Hülle anliegende Dichtfläche (20, 30) entweder zylindrisch geformt oder der Form eines Steilschulterreifens angepaßt ist, dadurch gekennzeichnet, daß die Begrenzung bei einer zylindrischen Dichtfläche (20) aus einem umlaufenden Anschlag (21) an der äußeren Seite der Dichtfläche (20) und bei einer einem Steilschulterreifen angepaßten Dichtfläche (30) aus einem Rand (31) an der inneren Seite der Dichtfläche (30) besteht, und daß im Überlappungsbereich der Enden eine in Umfangsrichtung verlaufende Teilfuge (23) vorgesehen ist.

2. Spreizbarer Ring nach Anspruch 1, dadurch gekennzeichnet, daß auf der Innenfläche zwei sich gegenüberliegende Handgriffe (61) angebracht sind.

3. Spreizbarer Ring nach Anspruch 1 oder 2, dadurch gekennzeichnet, daß sich die Spreizklemme (3) in der Spreizstellung in einer Übertotpunktlage befindet.

4. Spreizbarer Ring nach Anspruch 3, dadurch gekennzeichnet, daß die Spreizklemme (3) einen federnd gelagerten Spreizhebel (9) aufweist, der an seinem einen Ende mit einem Spannhebel (8) schwenkbar verbunden ist.

5. Spreizbarer Ring nach Anspruch 4, dadurch gekennzeichnet, daß auf der Innenfläche an der dem Spannhebel (8) in der maximalen Schrumpfposition der Spreizklemme (3) gegenüberliegenden Stelle ein Handgriff (12) angeordnet ist.

6. Spreizbarer Ring nach Anspruch 4 oder 5, dadurch gekennzeichnet, daß der Spannradius des Spannhebels (8) der Spreizklemme (3) einstellbar ist.

7. Spreizbarer Ring nach Anspruch 4 oder 5, dadurch gekennzeichnet, daß der Spannhebel (8) mit mehreren Lochpaaren (13) versehen ist, und daß der Spreizhebel als Bügel (9) mit einwärts gebogenen Enden zum Einstecken in die Lochpaare ausgebildet ist.

8. Spreizbarer Ring nach einem der vorhergehenden Ansprüche, dadurch gekennzeichnet, daß der Überlappungsbereich durch seitliche Ausklinkungen (22) der Enden (4, 5) gebildet ist.

9. Spreizbarer Ring nach einem der Ansprüche 1 bis 7, dadurch gekennzeichnet, daß der Überlappungsbereich mit Hilfe einer Gabel und einer Zunge (32) gebildet ist.

10. Spreizbarer Ring nach einem der vorhergehenden Ansprüche, dadurch gekennzeichnet, daß der Anschlag (21) stetig in die Dichtfläche (20) übergeht.

11. Spreizbarer Ring nach einem der Ansprüche 1 bis 9, dadurch gekennzeichnet, daß der Durchmesser des Randes (31) von der Dichtfläche (30) zum Innenrand hin leicht ansteigt.

12. Spreizbarer Ring nach Anspruch 11, dadurch gekennzeichnet, daß zum Ausgleich von Durchmessertoleranzen der Wulste jeder Ring (100) mit einem oder zwei weiteren Dichtflächen (30) und Rändern (31) jeweils nach außen größer werdender Durchmesser versehen ist.

## Claims

1. Spreadable ring (1) for the sealing of an envelope (42) on the bead (43) of a tyre to be retreaded or to be repaired during a pressure and heat treatment in an autoclave made of an inherently rigid material such as metal, rigid plastic or fibre reinforced plastic, with two overlapping ends, which are movable with respect to each other in order to spread the ring and thus to increase the diameter during sealing and in order to allow the ring to shrink and thus to reduce the diameter for removal of the ring after the pressure and heat treatment, with a spreading clamp (3), engaging over the two ends, and with a limitation for the axial alignment of the ring (1) with respect to the bead (43), a sealing surface (20, 30) making contact with the envelope either being cylindrically formed or adapted to the form of a steep shoulder tyre, characterized in that the limitation consists of a stop (21) running around the outer side of the sealing surface (20) in the case of a cylindrical sealing surface (20) and consists of a rim (31) on the inner side of the sealing surface (30) in the case of a sealing surface (30) adapted to a steep shoulder tyre, and in that a joint (23) running in circumferential direction is provided in the overlapping region of the ends.

2. Spreadable ring according to Claim 1, characterized in that two opposite handles (61) are attached on the inside surface.

3. Spreadable ring according to Claim 1 or 2, characterized in that, in the spread position, the spreading clamp (3) is in an overcentre position.

4. Spreadable ring according to Claim 3, characterized in that the spreading clamp (3) has a resiliently mounted spreading lever (9), which is pivotally connected at its one end to a tensioning lever (8).

5. Spreadable ring according to Claim 4, characterized in that a handle (12) is arranged on the inside surface at the point opposite the tensioning lever (8) in the maximum shrinkage position of the spreading clamp (3).

6. Spreadable ring according to Claim 4 or 5, characterized in that the tensioning radius of the tensioning lever (8) of the spreading clamp (3) is adjustable.

7. Spreadable ring according to Claim 4 or 5, characterized in that the tensioning lever (8) is provided with a plurality of pairs of holes (13), and in that the spreading lever is designed as a bow (9) with inwardly bent ends for the insertion into the pairs of holes.

8. Spreadable ring according to one of the preceding claims, characterized in that the overlapping region is formed by lateral cut-outs (23) of the ends (4, 5).

9. Spreadable ring according to one of Claims 1 to 7, characterized in that the overlapping region is formed with the aid of a fork and a tongue (32).

10. Spreadable ring according to one of the preceding claims, characterized in that the stop (21) merges continuously with the sealing surface (20).

11. Spreadable ring according to one of Claims 1 to 9, characterized in that the diameter of the rim (31) increases slightly from the sealing surface (30) towards the inner rim.

12. Spreadable ring according to Claim 11, characterized in that, for the compensation of diameter tolerances of the beads, each ring (100) is provided with one or two further sealing surfaces (30) and rims (31) of in each case outwardly increasing diameter.

**Revendications**

1. Anneau écartable (1) pour rendre étanche une enveloppe (42) aux talons (43) d'un pneu à rechaper ou à réparer, pendant un traitement sous pression et une traitement thermique dans un autoclave, en une matière à rigidité propre telle que du métal, du plastique dur ou du plastique renforcé par fibres, avec deux extrémités se chevauchant, qui sont mobiles l'une vers l'autre, pour écarter l'anneau et accroître ainsi le diamètre, lors de l'étanchement, et pour faire se contracteur l'anneau et diminuer ainsi le diamètre pour enlever l'anneau après le traitement sous pression et le traitement thermique, avec une pince d'écartement (3) qui recouvre les deux extrémités et avec une délimitation pour l'alignement axial de l'anneau (1) en face du talon (43), une surface d'étanchéité (20, 30) adhérant à l'enveloppe étant ou formée de manière cylindrique ou adaptée à la forme d'un pneu à conicité de 15°, caractérisé en ce que la délimitation est constituée, dans le cas d'une surface d'étanchéité (20) cylindrique, par une butée périmétrique (21) sur la face extérieure de la surface d'étanchéité (20) et, dans le cas d'une surface d'étanchéité (30) adaptée à un pneu à conicité de 15°, par un bord (31) sur la face intérieure de la surface d'étanchéité (30) et qu'un joint partiel (23) est prévu dans la zone de chevauchement des extrémités dans le sens de la périmétrie.

2. Anneau écartable selon la revendication 1, caractérisé en ce que deux poignées (61) situées l'une en face de l'autre sont montées sur la face intérieure.

3. Anneau écartable selon la revendication 1 ou 2, caractérisé en ce que la pince d'écartement (3) en position d'écartement se trouve dans une position au-delà du point mort.

4. Anneau écartable selon la revendication 3, caractérisé en ce que la pince d'écartement (3) présente un levier d'écartement (9) à ressort qui est relié, à l'une de ses extrémités, de façon pivotante à un levier de serrage (8).

5. Anneau écartable selon la revendication 4, caractérisé en ce qu'une poignée (12) est placée sur la face intérieure à l'endroit situé en face du levier de serrage (8) dans la position de contraction maximale de la pince d'écartement (3).

6. Anneau écartable selon la revendication 4 ou 5, caractérisé en ce que le rayon de serrage du levier de serrage (8) de la pince d'écartement (3) est réglable.

7. Anneau écartable selon la revendication 4 ou 5, caractérisé en ce que le levier de serrage (8) est pourvu de plusieurs paires de trous (13) et que le levier d'écartement est configuré comme un étrier (9) avec des extrémités recourbées vers l'intérieur pour traverser les paires de trous.

8. Anneau écartable selon l'une des revendications précédentes, caractérisé en ce que la zone de chevauchement est formée par des encoches latérales (22) des extrémités (4, 5).

9. Anneau écartable selon l'une des revendications 1 à 7, caractérisé en ce que la zone de chevauchement est formée à l'aide d'une fourche et d'une languette (32).

10. Anneau écartable selon l'une des revendications précédentes, caractérisé en ce que la butée (21) se confond en continu dans la surface d'étanchéité (20).

11. Anneau écartable selon l'une des revendications 1 à 9, caractérisé en ce que le diamètre du bord (31) croît légèrement de la surface d'étanchéité (30) vers le bord intérieur.

12. Anneau écartable selon la revendication 11, caractérisé en ce que, pour compenser les tolérances de diamètre des talons, chaque anneau (100) est pourvu d'une ou de deux autres surfaces d'étanchéité (30) et de bords (31) de diamètres respectivement croissants vers l'extérieur.

Fig. 1

Fig. 2

Fig. 3

45

42

40

41

43    43

44

1    1

*Fig. 6*

20'    21'

31   30   31   30   31   30

1'

100    *Fig. 5*

*Fig. 4*

Fig. 7

Fig. 8